# EUROPEAN PATENT SPECIFICATION

(11) **EP 4 116 689 B1**
(45) Date of publication and mention of the grant of the patent: **20.08.2025**
(21) Application number: 21765225.4
(22) Date of filing: 16.02.2021
(51) Int. Cl.: G01L 9/04, G01L 19/00

(54) **PRESSURE SENSOR**
DRUCKSENSOR
CAPTEUR DE PRESSION

(30) Priority: 05.03.2020 JP 2020037953
(43) Date of publication of application: 11.01.2023
(73) Proprietor: TDK Corporation, Tokyo 103-6128 (JP)
(72) Inventor: SASAHARA, Tetsuya, Tokyo 103-6128 (JP); UNNO, Ken, Tokyo 103-6128 (JP); KOBAYASHI, Masanori, Tokyo 103-6128 (JP); NAWAOKA, Kohei, Tokyo 103-6128 (JP)
(74) Representative: Epping - Hermann - Fischer
(86) International application number: PCT/JP2021/005736
(87) International publication number: WO 2021/177024

(56) References cited:
- CN-A- 109 374 192
- JP-A- 2001 165 797
- JP-A- 2001 165 797
- JP-A- 2003 344 181
- JP-A- 2003 344 181
- JP-A- H03 180 732
- JP-A- H03 180 732
- JP-A- H08 125 127

## Description

### Technical Field

The present invention relates to a pressure sensor that detects strain due to a deformation of a membrane by resistance change.

### Background

A pressure sensor is known that detects a distortion of a membrane (also referred to as a diaphragm) by resistance change using a piezoresistive effect. In such a pressure sensor, for example, a membrane that is elastically deformed by receiving pressure is formed on a part of a metallic pressure receiving member referred to as a stem, and the distortion due to the deformation of the membrane is detected by a resistance change of a resistor provided on the membrane.

In addition, there is a temperature dependency on the resistance change of the resistor formed on the membrane. Thus, when such a pressure sensor is installed in an environment where temperature change occurs, a technique for improving the accuracy of the detected value is required. For example, as a technique related to temperature compensation of a pressure sensor, a technique of connecting a resistor having a small temperature dependency between a bridge circuit and a power source for supplying an electric current to the bridge circuit is proposed (see Patent Document 1).

Further examples of prior art pressure sensors are known from cited Patent Documents 2, 3 and 4.

### Prior Arts

### Patent Document

Patent Document 1: JP H03 71031 A
Patent Document 2: JP H03 180732 A
Patent Document 3: JP 2001 165797 A
Patent Document 4: JP 2003 344181 A

### Summary of Invention

### Problems to be solved by Invention

In the pressure sensor in which the resistor is disposed outside the bridge circuit, however, the voltage of the power source decreases due to the resistance outside the bridge circuit, and the voltage applied to the bridge circuit decreases, so that there is a problem that the detection sensitivity is lowered. In this case, it is conceivable to increase the power source voltage in order to increase the detection sensitivity, but this causes a problem that the electric current consumption increases.

The present invention has been achieved under such circumstances and provides a pressure sensor having a high detection sensitivity even in an environment where temperature change occurs and being capable of preventing an increase in electric current consumption.

### Means for solving the Problem

The scope of the present invention is defined by the claims. To achieve the above object, a pressure sensor according to a first aspect of the present invention comprises at least:
a membrane generating a deformation in response to pressure; and
a detection circuit including:
   a first resistor and a third resistor arranged in a first strain region generating a strain characteristic in a predetermined direction on the membrane;
   a second resistor and a fourth resistor arranged in a second strain region generating a strain characteristic in the opposite direction to that of the first strain region on the membrane; and
   a bridge circuit formed by the first resistor to the fourth resistor, wherein at least one of the first resistor to the fourth resistor include:
a first portion as a resistance having a positive temperature resistance coefficient; and
a second portion as a resistance connected to the first portion in series and having a negative temperature resistance coefficient.

In the pressure sensor according to the first aspect of the present invention, at least one of the first to fourth resistors constituting the bridge circuit is a combined resistance in which a first portion as a resistance having a positive temperature resistance coefficient and a second portion as a resistance having a negative temperature resistance coefficient are connected in series. In such a combined resistance, it is possible to reduce or eliminate the change in resistance value due to the temperature change, and the pressure detection sensitivity is high from the relation between resistance value and strain even in an environment where temperature change occurs. Unlike a technique of connecting a resistor in series to the outside of the bridge circuit, the increase in electric current consumption can also be prevented.

Each of the first resistor, the second resistor, the third resistor, and the fourth resistor includes:
a first portion as a resistance having a positive temperature resistance coefficient; and
a second portion as a resistance connected to the first portion in series and having a negative temperature resistance coefficient.

**In** such a pressure sensor including the first to fourth resistors, the change in resistance value due to the temperature can be reduced or eliminated in the respective resistors forming the bridge circuit as a detection circuit. Thus, the detection circuit can favorably reduce the temperature change of the entire bridge circuit including the respective resistance values and the balance of the resistance values, and the pressure sensor including such a detection circuit can accurately detect the pressure even in an environment where temperature change occurs. Moreover, unlike the technique of connecting a resistor in series to the outside of the bridge circuit, the increase in electric current consumption can also be prevented.

For example, the first portion of the first resistor and the first portion of the third resistor may be arranged on a first circumference included in the first strain region,
the second portion of the first resistor and the second portion of the third resistor may be arranged on a third circumference included in the first strain region and being different from the first circumference,
the first portion of the second resistor and the first portion of the fourth resistor may be arranged on a second circumference included in the second strain region, and
the second portion of the second resistor and the second portion of the fourth resistor may be arranged on a fourth circumference included in the second strain region and being different from the second circumference.

When the first portions and the second portions of the two resistors are arranged separately on different circumferences, the resistances having positive and negative temperature resistance coefficients can be arranged easily in a small space, and this contributes to miniaturization. When each of the first portions and the second portions is arranged on the same circumference, the resistors are easily arranged in a portion having a large strain on the membrane.

For example, the first portion of the first resistor, the first portion of the third resistor, the second portion of the first resistor, and the second portion of the third resistor may be arranged on a first circumference included in the first strain region, and
the first portion of the second resistor, the first portion of the fourth resistor, the second portion of the second resistor, and the second portion of the fourth resistor may be arranged on a second circumference included in the second strain region.

When the first portions and the second portions of the two resistors are arranged on the same circumference, the resistors can be easily arranged in a portion having a large strain on the membrane, and it is thus possible to improve the sensitivity of the detection circuit at the maximum.

For example, the pressure sensor according to the present invention may comprise a temperature detection circuit disposed at a position having a pressure deformation smaller than that at any of a position of each of the first resistor to the fourth resistor on the membrane and including:
a temperature first portion as a resistance having a positive temperature resistance coefficient; and
a temperature second portion as a resistance connected to the temperature first portion in series and having a negative temperature resistance coefficient.

The temperature detection circuit can also reduce or eliminate the temperature change of the electric current consumption in the temperature detection circuit by using a resistance in which a resistance having a positive temperature resistance coefficient and a resistance having a negative temperature resistance coefficient are connected in series. Moreover, a resistance partial pressure value of the temperature first portion and the temperature second portion as two resistances can be detected as a detection output of the temperature detection circuit, and it is thus not necessary to separately provide an external resistance for partial pressure other than the two resistances.

For example, the pressure sensor according to the present invention may comprise a temperature compensation unit for compensating an output of the detection circuit using an output of the temperature detection circuit.

Such a pressure sensor can appropriately perform a temperature compensation of the output of the detection circuit. Moreover, even if a temperature dependency remains in the resistance values of the first to fourth resistors included in the bridge circuit, the pressure can be appropriately detected by the compensation with the temperature compensation unit.

A pressure sensor according to a second aspect, which is not part of the claimed invention, comprises:
a membrane generating a deformation in response to pressure;
a detection circuit including:
   a first resistor and a third resistor arranged in a first strain region generating a strain characteristic in a predetermined direction on the membrane;
   a second resistor and a fourth resistor arranged in a second strain region generating a strain characteristic in the opposite direction to that of the first strain region on the membrane; and
   a bridge circuit formed by the first resistor to the fourth resistor; and
a temperature detection circuit disposed at a position having a pressure deformation smaller than that at any of a position of each of the first resistor to the fourth resistor on the membrane and including:
   a temperature first portion as a resistance having a positive temperature resistance coefficient; and
   a temperature second portion as a resistance connected to the temperature first portion in series and having a negative temperature resistance coefficient.

Such a pressure sensor can reduce or eliminate the temperature change of the electric current consumption in the temperature detection circuit by using a resistance in which a resistance having a positive temperature resistance coefficient and a resistance having a negative temperature resistance coefficient are connected in series in the temperature detection circuit. Moreover, it is possible to detect a resistance partial pressure value of the temperature first portion and the temperature second portion as two resistances, and it is thus not necessary to prepare a resistance for partial pressure other than the two resistances. In such a temperature detection circuit, there is no waste for the resistances to be used, and this contributes to miniaturization.

### Brief Description of the Drawings

FIG. 1 is a schematic cross-sectional view of a pressure sensor according to First Embodiment of the present invention;
FIG. 2 is a conceptual diagram illustrating an arrangement of resistors and an electrode portion in the pressure sensor according to First Embodiment;
FIG. 3 is a conceptual diagram illustrating an example of a circuit formed in the pressure sensor shown in FIG. 2;
FIG. 4 is a conceptual diagram illustrating temperature characteristics of a detection circuit in the pressure sensor shown in FIG. 2 and FIG. 3;
FIG. 5 is a conceptual diagram illustrating an arrangement of resistors and an electrode portion in a pressure sensor according to Second Embodiment of the present invention;
FIG. 6 is a conceptual diagram illustrating an example of a circuit formed in the pressure sensor shown in FIG. 5;
FIG. 7 is a conceptual diagram illustrating a pressure change of the resistance value in the resistance included in the pressure sensor shown in FIG. 5 and FIG. 6;
FIG. 8 is a conceptual diagram illustrating an arrangement of resistors and an electrode portion in a pressure sensor according to Third Embodiment of the present invention;
FIG. 9 is a conceptual diagram illustrating an example of a circuit formed in the pressure sensor shown in FIG. 8;
FIG. 10 is a conceptual diagram illustrating temperature characteristics of a temperature detection circuit shown in FIG. 8 and FIG. 9; and
FIG. 11 is a conceptual diagram illustrating an example of a circuit formed in a pressure sensor according to Fourth Embodiment of the present invention.

### Detailed Description of Invention

Hereinafter, the present invention is described based on embodiments shown in the figures.

### First Embodiment

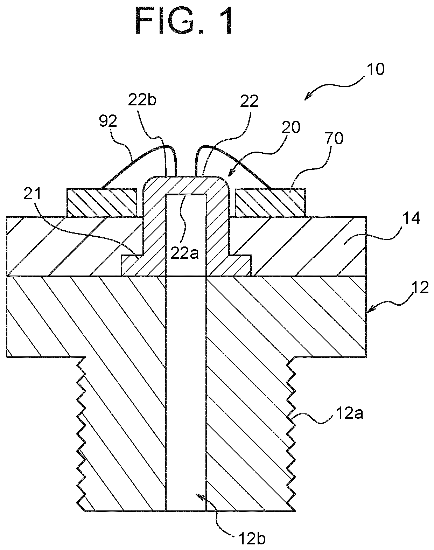

FIG. 1 is a schematic cross-sectional view of a pressure sensor 10 according to the present invention. The pressure sensor 10 includes a membrane 22 that is deformed in response to pressure. In the embodiment shown in FIG. 1, an upper bottom of a stem 20 is the membrane 22. In addition to the stem 20 including the membrane 22, the pressure sensor 10 includes a connection member 12 with a flow path 12b for transmitting pressure to the stem 20, a holding member 14 for fixing the stem 20 to the connection member 12, a substrate portion 70 wired to electrode portions 41 or the like on the membrane 22, and the like.

As shown in FIG. 1, a screw groove 12a for fixing the pressure sensor 10 to a measurement target is formed on the outer circumference of the connection member 12. The flow path 12b formed inside the connection member 12 tightly communicates with a pressure chamber as a measurement target by fixing the pressure sensor 10 via the screw groove 12a.

As shown in FIG. 1, the stem 20 has a bottomed (upper bottom) cylindrical outer shape and is provided at one end of the flow path 12b in the connection member 12. The stem 20 is provided with a flange portion 21 on the opening side and is fixed to the connection member 12 by sandwiching the flange portion 21 between the holding member 14 and the connection member 12. The opening of the stem 20 and the flow path 12b of the connection member 12 are tightly connected using the holding member 14, and the pressure as a measurement target is transmitted to the membrane 22 of the stem 20.

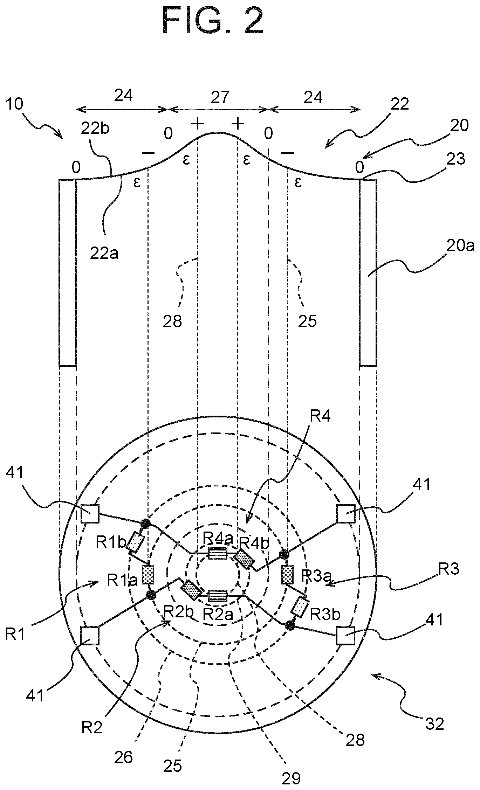

The membrane 22, which is the upper bottom of the stem 20, is thinner than other parts of the stem 20, such as a side wall 20a (see FIG. 2), and is deformed according to the pressure transmitted from the flow path 12b. The membrane 22 has an inner surface 22a that comes into contact with the pressure fluid and an outer surface 22b that is opposite to the inner surface 22a. A detection circuit 32 mentioned below, the electrode portions 41, and the like are provided on the outer surface 22b side of the membrane 22 (see FIG. 2).

The substrate portion 70 is fixed to the holding member 14 shown in FIG. 1. The substrate portion 70 includes wirings, electrode portions, and the like electrically connected to the pressure detection circuit 32 and the electrode portions 41 formed on the outer surface 22b of the membrane 22. The electrode portion of the substrate portion 70 and the electrode portions 41 on the membrane 22 are electrically connected via a connection wiring 92 or the like formed by wire bonding or the like. The substrate portion 70 has a ring outer shape, and the stem 20 inserts a through hole formed at the center of the substrate portion 70.

FIG. 2 is a conceptual diagram illustrating an arrangement state of the detection circuit 32 and the like on the outer surface 22b of the membrane 22. The upper part of FIG. 2 is a schematic cross-sectional view of the stem 20, and the lower part of FIG. 2 is a schematic plane view of the stem 20 as viewed from the upper side, which is the outer surface 22b side of the membrane 22.

As shown in the upper part of FIG. 2, the membrane 22 is provided with a first strain region 24 generating a strain characteristic in a predetermined direction and a second strain region 27 generating a strain characteristic in the opposite direction to that of the first strain region 24. The first strain region 24 of the membrane 22 receives a pressure (positive pressure) from the inner surface 22a and generates a strain ε-(compressive strain) in the negative direction, whereas the second strain region 27 of the membrane 22 receives a pressure (positive pressure) from the inner surface 22a and generates a strain ε+ (tensile strain) in the positive direction.

As shown in the upper part of FIG. 2, the first strain region 24 and the second strain region 27 are formed concentrically on the membrane 22. The second strain region 27 is formed in a central part of the membrane 22, and the first strain region 24 is formed on an outer circumference of the second strain region 27. An outer edge 23 of the membrane 22 is connected to the side wall 20a of the stem 20.

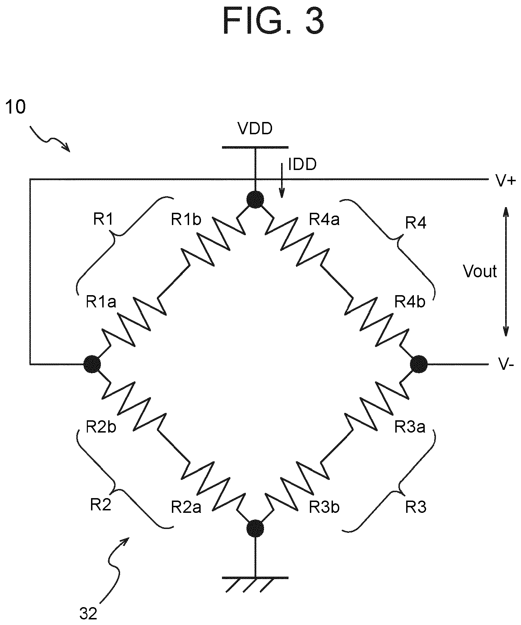

As shown in the lower part of FIG. 2, the pressure sensor 10 includes the detection circuit 32 forming a bridge circuit (see FIG. 3) by a first resistor R1, a second resistor R2, a third resistor R3, and a fourth resistor R4. In the bridge circuit, as shown in FIG. 3, one of the first and third resistors R1 and R3 and one of the second and fourth resistors R2 and R4 are connected in series, and the other of the first and third resistors R1 and R3 and the other of the second and fourth resistors R2 and R4 are connected in series. As shown in the lower part of FIG. 2 and FIG. 3, each of the first resistor R1, the second resistor R2, the third resistor R3, and the fourth resistor R4 forming the detection circuit 32 has two resistances of a first portion and a second portion with different characteristics.

That is, as shown in FIG. 3, the first resistor R1 includes a first resistor first portion R1a and a first resistor second portion R1b, and the second resistor R2 includes a second resistor first portion R2a and a second resistor second portion R2b. Moreover, the third resistor R3 includes a third resistor first portion R3a and a third resistor second portion R3b, and the fourth resistor R4 includes a fourth resistor first portion R4a and a fourth resistor second portion R4b.

As shown in the lower part of FIG. 2, the first resistor R1 including the first resistor first portion R1a and the first resistor second portion R1b and the third resistor R3 including the third resistor first portion R3a and the third resistor second portion R3b are arranged in the first strain region 24 of the membrane 22. The first resistor first portion R1a and the third resistor first portion R3a are arranged on a first circumference 25 included in the first strain region 24, and the first resistor second portion R1b and the third resistor second portion R3b are arranged on a third circumference 26 included in the first strain region 24 and being different from the first circumference 25.

Meanwhile, the second resistor R2 including the second resistor first portion R2a and the second resistor second portion R2b and the fourth resistor R4 including the fourth resistor first portion R4a and the fourth resistor second portion R4b are arranged in the second strain region 27 of the membrane 22. The second resistor first portion R2a and the fourth resistor first portion R4a are arranged on a second circumference 28 included in the second strain region 27, and the second resistor second portion R2b and the fourth resistor second portion R4b are arranged on a fourth circumference 29 included in the second strain region 27 and being different from the second circumference 28.

Since the second and fourth resistor first portions R2a and R4a and the second and fourth resistor second portions R2b and R4b are arranged on the circumferences 28 and 29 different from each other, both of the first portions R2a and R4a and the second portions R2b and R4b can be arranged efficiently in the small second strain region 27. Thus, the pressure sensor 10 is advantageous for miniaturization.

Preferably, the first circumference 25 for arranging the first resistor first portion R1a and the third resistor first portion R3a and the second circumference 28 for arranging the second resistor first portion R2a and the fourth resistor first portion R4a have a relation in which the generated strains cancel each other out (directions (positive and negative) are opposite to each other). Preferably, the third circumference 26 for arranging the first resistor second portion R1b and the third resistor second portion R3b and the fourth circumference 29 for arranging the second resistor second portion R2b and the fourth resistor second portion R4b have a relation in which the generated strains cancel each other out (directions (positive and negative) are opposite to each other). However, the relation between the first circumference 25, the second circumference 28, the third circumference 26, and the fourth circumference 29 is not limited to this.

As shown in the lower part of FIG. 2, the outer edge 23 of the membrane 22 is provided with the electrode portions 41 connected to the detection circuit 32. An electric current IDD is supplied to the detection circuit 32 on the membrane 22 via the electrode portions 41, and a detection output Vout of the detection circuit 32 is transmitted to the outside via the electrode portions 41 (see FIG. 3).

FIG. 3 illustrates a circuit diagram of the detection circuit 32 in the pressure sensor 10 shown in FIG. 2. In the detection circuit 32, a bridge circuit is formed by the first and third resistors R1 and R3 and the second and fourth resistors R2 and R4 arranged on opposite sides, respectively. As shown in FIG. 3, the detection circuit 32 is driven by the voltage VDD from the power supply. The first resistor R1, which is one side of the bridge circuit forming the detection circuit 32, is configured by connecting the first resistor first portion R1a and the first resistor second portion R1b in series. Similarly to the first resistor R1, the second resistor R2, the third resistor R3, and the fourth resistor R4, which are the other sides of the bridge circuit, are also configured by connecting the second to fourth resistor first portions R2a, R3a, and R4a and the second to fourth resistor second portion R2b, R3b, and R4b in series.

Here, the first to fourth resistor first portions R1a, R2a, R3a, and R4a are resistors each having a positive temperature resistance coefficient, and the first to fourth resistor second portions R1b, R2b, R3b, and R4b are resistors each having a negative temperature resistance coefficient. Thus, the first to fourth resistors R1, R2, R3, and R4 are a combined resistance in which a resistance having a positive temperature resistance coefficient and a resistance having a negative temperature resistance coefficient are connected in series.

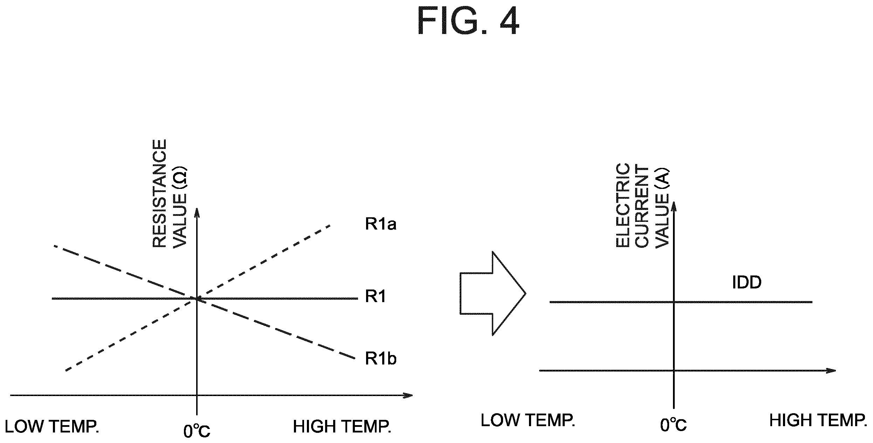

The left graph of FIG. 4 shows the temperature dependencies of the first resistor first portion R1a, the first resistor second portion R1b, and the first resistor R1 as a combined resistance obtained by connecting them in series. As shown in the left graph of FIG. 4, since the first resistor first portion R1a is a resistance having a positive temperature resistance coefficient, the resistance value increases as the temperature rises. Moreover, since the first resistor second portion R1b is a resistance having a negative temperature resistance coefficient, the resistance value decreases as the temperature rises.

Thus, the first resistor R1 as a combined resistance obtained by connecting the first resistor first portion R1a and the first resistor second portion R1b in series has a smaller temperature dependency than that of each portion or has a substantially constant resistance value in a predetermined temperature range by canceling out part or whole of the temperature dependencies of the first portion R1a and the second portion R1b. Thus, the first resistor R1 can achieve a resistor having a small temperature dependency. Moreover, the first resistor R1 can achieve a resistor having a high detection sensitivity and a small temperature dependency, for example, by adopting a resistance having a large resistance change per unit strain and a high pressure detection sensitivity as the first portion R1a or the second portion R1b and adopting a resistance having a temperature resistance coefficient with opposite positive and negative as the first portion R1a or the second portion R1b to be combined therewith.

Similarly to the first resistor R1 shown in the left graph of FIG. 4, each of the second to fourth resistors R2, R3, and R4 also has a smaller temperature dependency than that of each portion or has a substantially constant resistance value in a predetermined temperature range. Thus, as shown in the right graph of FIG. 4, the value of the electric current IDD flowing through the detection circuit 32 shown in FIG. 3 can be smaller in temperature change as compared with a detection circuit using resistances with temperature resistance coefficients of the same tendency or one resistance with a very small temperature resistance coefficient or can be substantially constant in a predetermined temperature range. Thus, the detection circuit 32 can have a high detection sensitivity in a wide temperature range and can prevent an increase in electric current consumption.

Examples of the resistance material having a positive temperature resistance coefficient that can be adopted as the first to fourth resistor first portions R1a, R2a, R3a, and R4a include metals such as Pt, Ni, and Co and barium titanate based ceramics. Examples of the resistance material having a negative temperature resistance coefficient that can be adopted as the first to fourth resistor second portions R1b, R2b, R3b, and R4b include Ni, Mn, or Co based oxides and silicon based semiconductors. In the first to fourth resistors R1 to R4, however, the resistance material constituting the first portion and the second portion is not limited as long as a resistance having a positive temperature resistance coefficient and a resistance having a negative temperature resistance coefficient are connected in series.

The stem 20 including the membrane 22 and the first to fourth resistors R1 to R4 and the electrode portions 41 provided on the membrane 22 as shown in FIG. 2 are manufactured, for example, as follows. First, the stem 20 including the membrane 22 is manufactured by machining. The material of the stem 20 is not limited as long as it generates an appropriate elastic deformation, and examples thereof include metals and alloys such as stainless steel.

Next, a semiconductor thin film or a metal thin film is formed on the membrane 22 with an insulating film interposed therebetween, and these thin films are subjected to a fine processing with a semiconductor processing technique, such as laser processing and screen printing, so as to form the first to fourth resistors R1 to R4 and the electrode portions 41 as shown in FIG. 2. If necessary, an insulating surface layer may be formed on the membrane 22 other than the electrode portions 41 connecting the wiring to the outside, such as the first to fourth resistors R1 to R4.

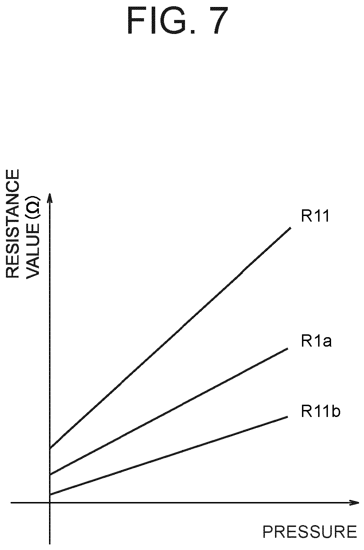

The pressure sensor 10 shown in FIG. 1 to FIG. 4 can reduce or eliminate the change in resistance value due to the temperature change of the first to fourth resistors R1 to R4 included in the bridge circuit constituting the detection circuit 32 and can precisely detect the pressure from the relation between resistance value and strain even in an environment where a temperature change occurs. In the pressure sensor 10, since both of the first to fourth resistor first portions R1a, R2a, R3a, and R4a and the first to fourth resistor second portions R1b, R2b, R3b, and R4b have a resistance change due to the strain of the membrane (see FIG. 7), unlike the conventional technique in which resistances are connected in series to the outside of the bridge circuit, the detection sensitivity is high, and the increase in electric current consumption can be prevented.

### Second Embodiment

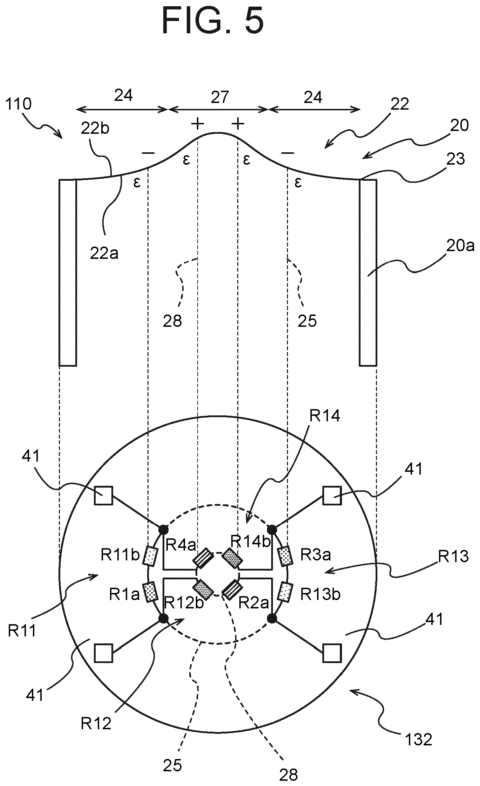

FIG. 5 is a conceptual diagram illustrating a configuration of a detection circuit 132 disposed on the membrane 22 of a pressure sensor 110 according to Second Embodiment of the present invention. The upper part of FIG. 5 is a schematic cross-sectional view of the stem 20, and the lower part of FIG. 5 is a schematic plane view of the stem 20 as viewed from the upper side (the outer surface 22b side of the membrane 22). Except for the arrangement of a first resistor second portion R11b, a second resistor second portion R12b, a third resistor second portion R13b, and a fourth resistor second portion R14b included in the detection circuit 132, the pressure sensor 110 is similar to the pressure sensor 10 shown in FIG. 2. In the description of the pressure sensor 110, the differences from the pressure sensor 10 are mainly described, and the common respects with the pressure sensor 10 are not described.

As shown in FIG. 5, the pressure sensor 110 includes a first resistor R11 and a third resistor R13 arranged in the first strain region 24 of the membrane 22 and a second resistor R12 and a fourth resistor R14 arranged in the second strain region 27 of the membrane 22. As shown in FIG. 5, the first resistor R11 includes a first resistor first portion R1a and a first resistor second portion R11b, and the third resistor R13 includes a third resistor first portion R3a and a third resistor second portion R13b. The second resistor R12 includes a second resistor first portion R2a and a second resistor second portion R12b, and the fourth resistor R14 includes a fourth resistor first portion R4a and a fourth resistance second portion R14b.

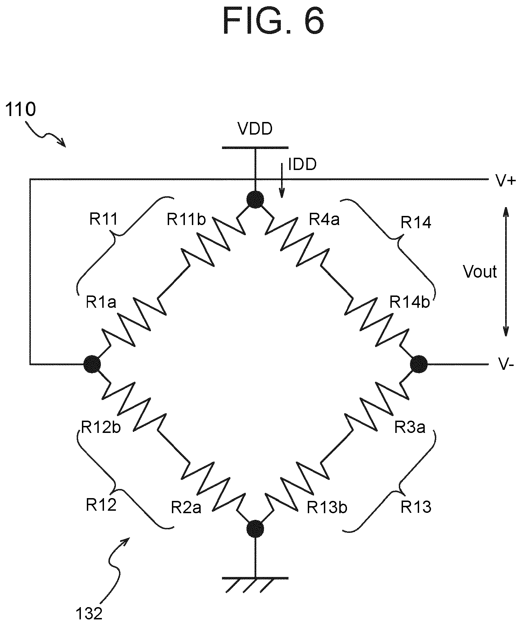

FIG. 6 illustrates a circuit diagram of the detection circuit 132 in the pressure sensor 110 shown in FIG. 5. As shown in FIG. 6, similarly to the first to fourth resistors R1 to R4 shown in FIG. 3, the first to fourth resistors R11 to R14 of the detection circuit 132 are configured by connecting the first to fourth resistor first portions R1a, R2a, R3a, and R4a and the first to fourth resistor second portions R11b, R12b, R13b, and R14b in series.

In the pressure sensor 110, as shown in the lower part of FIG. 5, the first resistor first portion R1a, the third resistor first portion R3a, the first resistor second portion R11b, and the third resistor second portion R13b are arranged on the first circumference 25 included in the first strain region 24. Moreover, the second resistor first portion R2a, the fourth resistor first portion R4a, the second resistor second portion R12b, and the fourth resistor second portion R14b are arranged on the second circumference 28 included in the second strain region 27.

The first circumference 25 for arranging the first and third resistors R11 and R13 can be a position having the largest strain in the first strain region 24. Moreover, the second circumference 28 for arranging the second and fourth resistors R12 and R14 can be a position having the largest strain in the second strain region 27. In the pressure sensor 110, the first portions R1a, R2a, R3a, and R4a and the second portions R11b, R12b, R13b, and R14b of the resistors R11 to R14 included in the detection circuit 132 are arranged at positions each having a large strain on the membrane, and the sensitivity of the detection circuit 132 can be increased.

FIG. 7 is a graph showing a relation between the resistance values of the first resistor R11, the first resistor first portion R1a, and the first resistor second portion R11b included in the detection circuit 132 of the pressure sensor 110 and the pressure received by the membrane 22. In the detection circuit 132 of the pressure sensor 110, as shown in FIG. 7, both of the first resistor first portion R1a and the first resistor second portion R11b, which perform temperature compensation based on mutual characteristics, have the change in resistance value according to the pressure received by the membrane 22. Thus, the resistance value of the first resistor R11 included in the detection circuit 132 changes greatly according to the pressure change. The pressure sensor 110 not only achieves temperature compensation of sensitivity, but also exhibits a better detection sensitivity as compared with a conventional pressure sensor in which a resistance for temperature compensation is disposed outside the detection circuit 132.

As for the common respects with the pressure sensor 10, the pressure sensor 110 exhibits effects similar to those of the pressure sensor 10.

### Third Embodiment

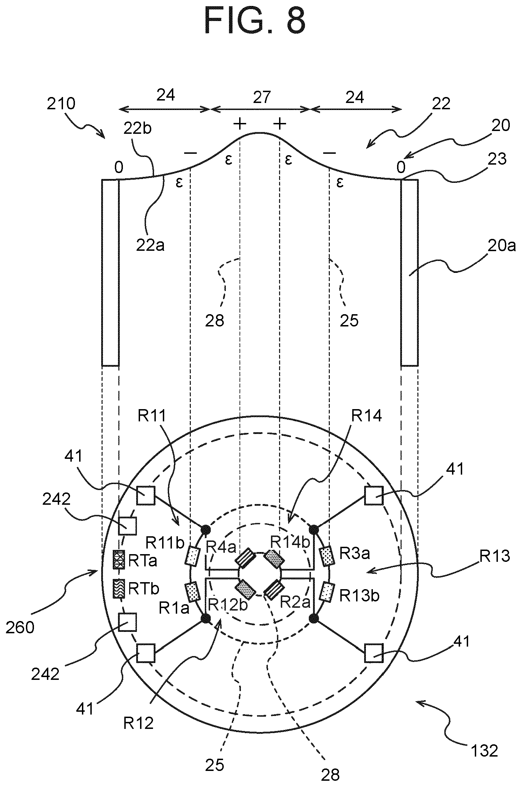

FIG. 8 is a conceptual diagram illustrating a configuration of the detection circuit 132 and a temperature detection circuit 260 arranged on the membrane 22 of a pressure sensor 210 according to Third Embodiment of the present invention. The upper part of FIG. 8 is a schematic cross-sectional view of the stem 20, and the lower part of FIG. 8 is a schematic plane view of the stem 20 as viewed from the upper side (the outer surface 22b side of the membrane 22). Except for the temperature detection circuit 260 and an electrode portion 242, the pressure sensor 210 is similar to the pressure sensor 110 shown in FIG. 5. In the description of the pressure sensor 210, the differences from the pressure sensor 110 are mainly described, and the common respects with the pressure sensor 110 are not described.

As shown in the lower part of FIG. 8, the outer surface 22b of the membrane 22 in the pressure sensor 210 is provided with a temperature detection circuit 260 for detecting the temperature in addition to the detection circuit 132 for detecting the pressure. The detection circuit 132 of the pressure sensor 210 is similar to the detection circuit 132 of the pressure sensor 110 shown in FIG. 5.

As shown in FIG. 8, the temperature detection circuit 260 includes a temperature first portion RTa as a resistance having a positive temperature resistance coefficient and a temperature second portion RTb as a resistance having a negative temperature resistance coefficient. The temperature first portion RTa and the temperature second portion RTb included in the temperature detection circuit 260 are arranged on the membrane 22 at positions each having a smaller pressure deformation than that at any of the positions of the first to fourth resistors R11 to R14.

As shown in FIG. 8, the temperature first portion RTa and the temperature second portion RTb are arranged on the outer edge 23 connected to the side wall 20a of the stem 20 in the membrane 22. As shown in the upper part of FIG. 8, the outer edge 23 is hardly deformed by pressure.

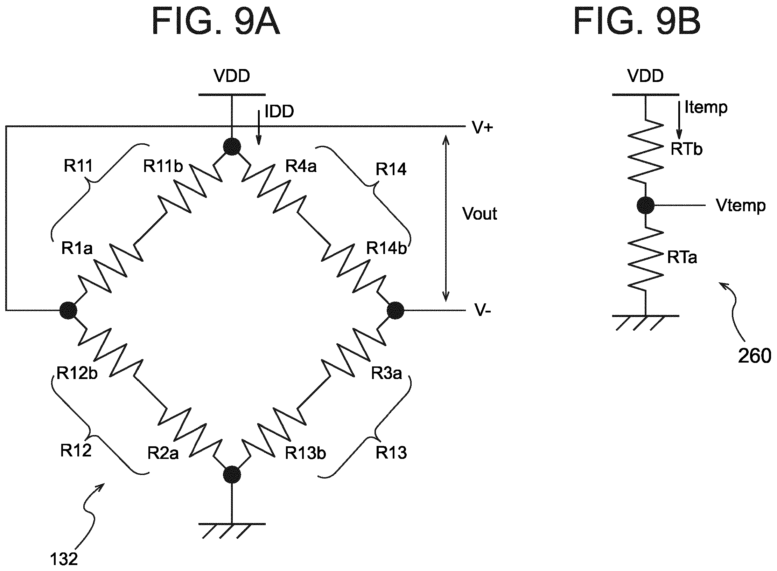

As shown in the lower part of FIG. 8, the outer edge 23 of the membrane 22 is provided with an electrode portion 242 connected to the temperature detection circuit 260. An electric current Itemp is supplied to the temperature detection circuit 260 on the membrane via the electrode portion 242, and a detection output Vtemp of the temperature detection circuit 260 is transmitted to the outside via the electrode portions 41 (see FIG. 9B).

FIG. 9A illustrates a circuit diagram of the detection circuit 132 in the pressure sensor 210 shown in FIG. 8, and FIG. 9B illustrates a circuit diagram of the temperature detection circuit 260 in the pressure sensor 210. The circuit diagram of the detection circuit 132 shown in FIG. 9A is similar to the circuit diagram shown in FIG. 6.

In the temperature detection circuit 260, as shown in FIG. 9B, the temperature first portion RTa as a resistance having a positive temperature resistance coefficient and the temperature second portion RTb as a resistance having a negative temperature resistance coefficient are connected in series. The temperature detection circuit 260 detects a resistance partial pressure value of the temperature first portion RTa and the temperature second portion RTb as a detection output Vtemp.

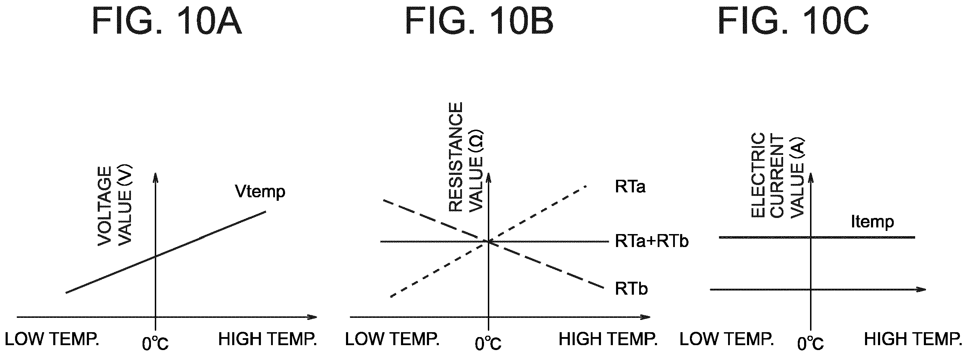

FIG. 10B illustrates temperature dependencies of the temperature first portion RTa, the temperature second portion RTb, and a combined resistance RTa + RTb obtained by connecting them in series in the temperature detection circuit 260. As shown in FIG. 10B, since the temperature first portion RTa is a resistance having a positive temperature resistance coefficient, the resistance value increases as the temperature rises. Moreover, since the temperature second portion RTb is a resistance having a negative temperature resistance coefficient, the resistance value decreases as the temperature rises.

Thus, the combined resistance RTa + RTb obtained by connecting them in series has a smaller temperature dependency than that of each portion or has a substantially constant resistance value in a predetermined temperature range by canceling out part or whole of the temperature dependencies of the two resistances. Thus, as shown in FIG. 10C, the value of the electric current Itemp flowing through the temperature detection circuit 260 can be smaller in temperature change as compared with a detection circuit using one resistance with a very small temperature resistance coefficient or can be substantially constant in a predetermined temperature range. Thus, the temperature detection circuit 260 can reduce or eliminate the temperature change of the electric current consumption.

As shown in FIG. 10A, the temperature detection circuit 260 can detect the temperature of the membrane 22 by detecting a resistance partial pressure value of the temperature first portion RTa and the temperature second portion RTb as a detection output Vtemp. In the pressure sensor 210, it is not necessary to separately provide an external resistance for detecting the partial pressure other than the two resistances.

As for the common respects with the pressure sensor 110, the pressure sensor 210 exhibits effects similar to those of the pressure sensor 110.

### Fourth Embodiment

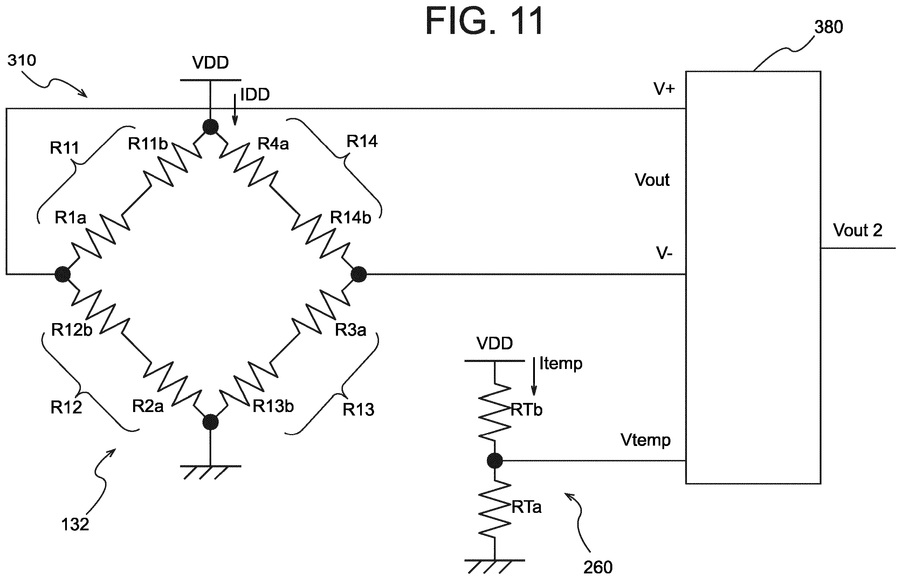

FIG. 11 is a circuit diagram of a pressure sensor 310 according to Fourth Embodiment of the present invention. Except for a temperature compensation unit 380, the pressure sensor 310 is similar to the pressure sensor 210 shown in FIG. 8 and FIG. 9. In the description of the pressure sensor 310, the differences from the pressure sensor 210 are mainly described, and the common respects with the pressure sensor 210 are not described.

As shown in FIG. 11, a detection output Vout from the detection circuit 132 and a detection output Vtemp from the temperature detection circuit 260 are input to the temperature compensation unit 380 of the pressure sensor 310. The detection circuit 132 and the temperature detection circuit 260 of the pressure sensor 310 are similar to the detection circuit 132 and the temperature detection circuit 260 of the pressure sensor 210 shown in FIG. 9.

The temperature compensation unit 380 compensates the detection output Vout of the detection circuit 132 using the detection output Vtemp of the temperature detection circuit 260 and outputs a compensation output Vout2. The temperature compensation unit 380 includes a microprocessor, an ASIC, and the like and is provided outside the membrane 22, such as on the substrate 70 shown in FIG. 1.

The detection output Vout from the detection circuit 132 shown in FIG. 11 does not need to be subjected to temperature compensation as long as the resistance values of the first to fourth resistors R1 to R4 included in the detection circuit 132 are in an ideal state having no temperature dependency as shown in the left graph of FIG. 4. Since the pressure sensor 310 includes the temperature compensation unit 380, however, the pressure can be detected accurately by performing a compensation using the detection output Vtemp of the temperature detection circuit 260 even if the resistance values of the first to fourth resistors R1 to R4 included in the detection circuit 132 are in a temperature range exhibiting a temperature dependency. Thus, the pressure sensor 310 can be particularly favorably used, for example, when the pressure needs to be detected in a wide temperature range.

As for the common respects with the pressure sensor 210, the pressure sensor 310 exhibits effects similar to those of the pressure sensor 210.

Hereinabove, the pressure sensor according to the present invention is described with reference to embodiments, but is not limited to only these embodiments. Needless to say, the present invention includes many other embodiments and modifications. For example, the shape and fixation structure of the stem 20 shown in FIG. 1 are only an example, and the pressure sensor of the present invention can adopt any other shape and fixation structure in which a membrane is appropriately deformed in response to pressure.

In the detection circuits 32 and 132, each of the first to fourth resistors R1 to R4 and R11 to R14 includes two resistances, but the number of resistances included in each of the first to fourth resistors R1 to R4 and R11 to R14 is not limited to only two. In the detection circuit 32 shown in FIG. 2, the arrangement between the first to fourth resistors first portions R1a, R2a, R3a, and R4a as resistances each having a positive temperature resistance coefficient and the first to fourth resistors second portions R1b, R2b, R3b, and R4b as resistances each having a negative temperature resistance coefficient may be interchanged. Also in the temperature detection circuit 260 shown in FIG. 9 and FIG. 11, the arrangement between the temperature first portion RTa as a resistance having a positive temperature resistance coefficient and the temperature second portion RTb as a resistance having a negative temperature resistance coefficient may be interchanged.

### Explanation of References

10, 110, 210, 310... pressure sensor
12... connection member
12a... screw groove
12b... flow path
14... holding member
20... stem
20a ... side wall
21... flange portion
22a... inner surface
22... membrane
22a... inner surface
22b... outer surface
23... outer edge
24... first strain region
25... first circumference
26... third circumference
27... second strain region
28... second circumference
29... fourth circumference
32, 132... detection circuit
R1, R11... first resistor
R1a... first resistor first portion
R1b, R11b... first resistor second portion
R2, R12... second resistor
R2a... second resistor first portion
R2b, R12b... second resistor second portion
R3, R13... third resistor
R3a... third resistor first portion
R3b, R13b... third resistor second portion
R4, R14... fourth resistor
R4a... fourth resistor first portion
R4b, R14b... fourth resistor second portion
41, 242... electrode portion
VDD... voltage
IDD, Itemp ... electric current
Vout, Vtemp... detection output
92... connection wiring
70... substrate portion
260... temperature detection circuit
RTa... temperature first portion
RTb... temperature second portion
380... temperature compensation unit

## Claims

1. A pressure sensor (10, 110, 210, 310) comprising:
a membrane (22) generating a deformation in response to pressure; and
a detection circuit (32, 132) including:
a first resistor (R1, R11) and a third resistor (R3, R13) arranged in a first strain region (24) generating a strain characteristic in a predetermined direction on the membrane;
a second resistor (R2, R12) and a fourth resistor (R4, R14) arranged in a second strain region (27) generating a strain characteristic in the opposite direction to that of the first strain region on the membrane; and
a bridge circuit (32, 132) formed by the first resistor to the fourth resistor,
wherein each of the first resistor, the second resistor, the third resistor, and the fourth resistor includes:
a first portion (R1a, R2a, R3a, R4a) as a resistance having a positive temperature resistance coefficient; and
a second portion (R1b, R11b, R2b, R12b, R3b, R13b, R4b, R14b) as a resistance connected to the first portion in series and having a negative temperature resistance coefficient, and
**characterized in that**
the first portion of the first resistor (R1a) and the first portion of the third resistor (R3a) are arranged on a first circumference (25) included in the first strain region,
the second portion of the first resistor (R1b) and the second portion of the third resistor (R3b) are arranged on a third circumference (26) included in the first strain region and being different from the first circumference,
the first portion of the second resistor (R2a) and the first portion of the fourth resistor (R4a) are arranged on a second circumference (28) included in the second strain region, and
the second portion of the second resistor (R2b) and the second portion of the fourth resistor (R4b) are arranged on a fourth circumference (29) included in the second strain region and being different from the second circumference
or
the first portion of the first resistor (R1a), the first portion of the third resistor (R3a), the second portion of the first resistor (R11b), and the second portion of the third resistor (R13b) are arranged on a first circumference (25) included in the first strain region, and
the first portion of the second resistor (R2a), the first portion of the fourth resistor (R4a), the second portion of the second resistor (R12b), and the second portion of the fourth resistor (R14b) are arranged on a second circumference (28) included in the second strain region, the second circumference being concentric with the first circumference.

2. The pressure sensor according to claim 1, comprising a temperature detection circuit (260) disposed at a position having a pressure deformation smaller than that at any of a position of each of the first resistor to the fourth resistor on the membrane and including:
a temperature first portion (RTa) as a resistance having a positive temperature resistance coefficient; and
a temperature second portion (RTb) as a resistance connected to the temperature first portion in series and having a negative temperature resistance coefficient.

3. The pressure sensor according to claim 2, comprising a temperature compensation unit (380) for compensating an output of the detection circuit using an output of the temperature detection circuit.

## Patentansprüche

1. Ein Drucksensor (10, 110, 210, 310), der Folgendes umfasst:
eine Membran (22), die in Reaktion auf Druck eine Verformung erzeugt; und
eine Erfassungsschaltung (32, 132) mit:
einem ersten Widerstand (R1, R11) und einem dritten Widerstand (R3, R13), die in einem ersten Dehnungsbereich (24) angeordnet sind, der eine Dehnungscharakteristik in einer vorbestimmten Richtung auf der Membran erzeugt;
einen zweiten Widerstand (R2, R12) und einen vierten Widerstand (R4, R14), die in einem zweiten Dehnungsbereich (27) angeordnet sind, der eine Dehnungscharakteristik in der entgegengesetzten Richtung zu der des ersten Dehnungsbereichs auf der Membran erzeugt; und
eine Brückenschaltung (32, 132), die durch den ersten Widerstand bis zum vierten Widerstand gebildet wird,
wobei jeder der ersten, zweiten, dritten und vierten Widerstände umfasst:
einen ersten Abschnitt (R1a, R2a, R3a, R4a) als Widerstand mit einem positiven Temperaturwiderstandskoeffizienten; und
einen zweiten Abschnitt (R1b, R11b, R2b, R12b, R3b, R13b, R4b, R14b) als Widerstand, der mit dem ersten Abschnitt in Reihe geschaltet ist und einen negativen Temperaturwiderstandskoeffizienten aufweist, und
**dadurch gekennzeichnet, dass**
der erste Abschnitt des ersten Widerstands (R1a) und der erste Abschnitt des dritten Widerstands (R3a) auf einem ersten Umfang (25) angeordnet sind, der in dem ersten Dehnungsbereich enthalten ist,
der zweite Abschnitt des ersten Widerstands (R1b) und der zweite Abschnitt des dritten Widerstands (R3b) auf einem dritten Umfang (26) angeordnet sind, der in dem ersten Dehnungsbereich enthalten ist und sich von dem ersten Umfang unterscheidet,
der erste Abschnitt des zweiten Widerstands (R2a) und der erste Abschnitt des vierten Widerstands (R4a) auf einem zweiten Umfang (28) angeordnet sind, der in dem zweiten Dehnungsbereich enthalten ist, und
der zweite Abschnitt des zweiten Widerstands (R2b) und der zweite Abschnitt des vierten Widerstands (R4b) auf einem vierten Umfang (29) angeordnet sind, der in dem zweiten Dehnungsbereich enthalten ist und sich von dem zweiten Umfang unterscheidet.
oder
der erste Abschnitt des ersten Widerstands (R1a), der erste Abschnitt des dritten Widerstands (R3a), der zweite Abschnitt des ersten Widerstands (R11b) und der zweite Abschnitt des dritten Widerstands (R13b) auf einem ersten Umfang (25) angeordnet sind, der in dem ersten Dehnungsbereich enthalten ist, und
der erste Abschnitt des zweiten Widerstands (R2a), der erste Abschnitt des vierten Widerstands (R4a), der zweite Abschnitt des zweiten Widerstands (R12b) und der zweite Abschnitt des vierten Widerstands (R14b) auf einem zweiten Umfang (28) angeordnet sind, der in dem zweiten Dehnungsbereich enthalten ist, wobei der zweite Umfang konzentrisch zu dem ersten Umfang ist.

2. Der Drucksensor gemäß Anspruch 1, umfassend eine Temperaturerfassungsschaltung (260), die an einer Position angeordnet ist, die eine geringere Druckverformung aufweist als jede Position des ersten bis vierten Widerstands auf der Membran, und die Folgendes umfasst:
einen ersten Temperaturabschnitt (RTa) als Widerstand mit einem positiven Temperaturwiderstandskoeffizienten; und
einen zweiten Temperaturabschnitt (RTb) als Widerstand, der mit dem ersten Temperaturabschnitt in Reihe geschaltet ist und einen negativen Temperaturwiderstandskoeffizienten aufweist.

3. Drucksensor nach Anspruch 2, umfassend eine Temperaturkompensationseinheit (380) zum Kompensieren eines Ausgangs der Erfassungsschaltung unter Verwendung eines Ausgangs der Temperaturerfassungsschaltung.

## Revendications

1. Capteur de pression (10, 110, 210, 310) comprenant :
une membrane (22) générant une déformation en réponse à une pression ; et
un circuit de détection (32, 132) comprenant :
une première résistance (R1, R11) et une troisième résistance (R3, R13) agencées dans une première région de contrainte (24), générant sur la membrane une caractéristique de contrainte dans une direction prédéterminée ;
une deuxième résistance (R2, R12) et une quatrième résistance (R4, R14) agencées dans une seconde région de contrainte (27), générant sur la membrane une caractéristique de contrainte dans la direction opposée à celle de la première région ; et
un circuit en pont (32, 132) formé par la première résistance à la quatrième résistance,
la première résistance, la deuxième résistance, la troisième résistance et la quatrième résistance comprenant chacune :
une première partie (R1a, R2a, R3a, R4a) servant de résistance présentant un coefficient positif de résistance à la température ; et
une seconde partie (R1b, R11b, R2b, R12b, R3b, R13b, R4b, R14b) servant de résistance connectée en série à la première partie et présentant un coefficient négatif de résistance à la température, et
**caractérisé en ce que**
la première partie de la première résistance (R1a) et la première partie de la troisième résistance (R3a) sont agencées sur une première circonférence (25) comprise dans la première région de contrainte,
la seconde partie de la première résistance (R1b) et la seconde partie de la troisième résistance (R3b) sont agencées sur une troisième circonférence (26) comprise dans la première région de contrainte et différente de la première circonférence,
la première partie de la deuxième résistance (R2a) et la première partie de la quatrième résistance (R4a) sont agencées sur une deuxième circonférence (28) comprise dans la seconde région de contrainte, et
la seconde partie de la deuxième résistance (R2b) et la seconde partie de la quatrième résistance (R4b) sont agencées sur une quatrième circonférence (29) comprise dans la seconde région de contrainte et différente de la deuxième circonférence
ou
la première partie de la première résistance (R1a), la première partie de la troisième résistance (R3a), la seconde partie de la première résistance (R11b) et la seconde partie de la troisième résistance (R13b) sont agencées sur une première circonférence (25) comprise dans la première région de contrainte, et
la première partie de la deuxième résistance (R2a), la première partie de la quatrième résistance (R4a), la seconde partie de la deuxième résistance (R12b) et la seconde partie de la quatrième résistance (R14b) sont agencées sur une seconde circonférence (28) comprise dans la seconde région de contrainte, la seconde circonférence étant concentrique à la première circonférence.

2. Capteur de pression selon la revendication 1, comprenant un circuit de détection de température (260) disposé au niveau d'une position présentant une déformation à la pression inférieure à celle au niveau d'une position quelconque de chacun des première à quatrième résistances sur la membrane et comprenant :
une première partie de température (RTa) servant de résistance présentant un coefficient positif de résistance à la température ; et
une seconde partie de température (RTb) servant de résistance connectée en série à la première partie de température et présentant un coefficient négatif de résistance à la température.

3. Capteur de pression selon la revendication 2, comprenant une unité de compensation de température (380) pour compenser une sortie du circuit de détection au moyen d'une sortie du circuit de détection de température.
